Europäisches Patentamt

European Patent Office

Office européen des brevets

(19)

(11) **EP 1 236 263 B1**

(12) **FASCICULE DE BREVET EUROPEEN**

(45) Date de publication et mention
de la délivrance du brevet:
**06.05.2004 Bulletin 2004/19**

(51) Int Cl.⁷: **H02K 19/20**, H02K 7/02,
H02K 41/035, H02K 3/26

(21) Numéro de dépôt: **00993357.3**

(22) Date de dépôt: **08.12.2000**

(86) Numéro de dépôt international:
**PCT/FR2000/003459**

(87) Numéro de publication internationale:
**WO 2001/043262 (14.06.2001 Gazette 2001/24)**

(54) **MOTEUR/GENERATRICE A RELUCTANCE EXCITEE ET A BOBINAGE DANS L'ENTREFER**

RELUKTANZ-MOTOR/-GENERATOR WIRD DURCH EINE WICKLUNG IM LUFTSPALT ERREGT

MOTOR/GENERATOR WITH ENERGISED RELUCTANCE AND COIL IN THE AIR GAP

(84) Etats contractants désignés:
**AT BE CH CY DE DK ES FI FR GB GR IE IT LI LU
MC NL PT SE TR**

(30) Priorité: **08.12.1999 FR 9915494**

(43) Date de publication de la demande:
**04.09.2002 Bulletin 2002/36**

(73) Titulaire: **CENTRE NATIONAL DE
LA RECHERCHE SCIENTIFIQUE (CNRS)
75016 Paris (FR)**

(72) Inventeurs:
• **BEN AHMED, Abdel Hamid
F-35200 Rennes (FR)**
• **MULTON, Bernard
F-35200 Rennes (FR)**

• **DELAMARE, Jérome
F-38000 Grenoble (FR)**
• **KERZREHO, Corentin
76500 LA LONDE (FR)**
• **COGNARD, Jean-Yves
F-35170 Bruz (FR)**
• **BERNARD, Nicolas
F-35170 Bruz (FR)**

(74) Mandataire:
**Habasque, Etienne Joel Jean-François et al
Cabinet Lavoix
2, Place d'Estienne d'Orves
75441 Paris Cédex 09 (FR)**

(56) Documents cités:
**WO-A-99/59236          FR-A- 1 445 327
FR-A- 1 445 572          US-A- 5 710 476
US-A- 5 982 074**

## Description

La présente invention concerne les machines tournantes et se rapporte plus particulièrement aux machines à réluctance excitées.

Dans le cadre du stockage électromécanique d'énergie, les machines électriques faisant office de moteur et de générateur sont généralement des structures classiques (synchrones à aimants permanents ou asynchrones).

L'association de la fonction stockage, proprement dite, assurée par un volant d'inertie, à la fonction moteur/générateur se fait de deux manières :

- « découplée » où le moteur/générateur correspond à un composant simplement rajouté de topologie des plus classiques ;
- « intégrée » où la machine fait partie du volant d'inertie. Là aussi, les machines utilisées sont de conception relativement classique.

Concernant les topologies utilisées, celles-ci peuvent être les suivantes :

- machine synchrone à réluctance variable pure, à champ magnétique radial et bobinage dans l'entrefer dont le guidage est assuré par des roulements à billes assistés par des paliers magnétiques (par exemple système « Active Power ») ;
- machine synchrone à aimants permanents à champ radial ou axial et à bobinage dans l'entrefer ou à bobinage dans des encoches (diverses architectures) ;
- machine asynchrone à bobinage dans des encoches et à rotor massif (par exemple système <<Japanese Flywheel>>).

Ces topologies ne comportent pas d'excitation réglable et certaines pièces ferromagnétiques sont fixes. Ces topologies présentent donc, trois inconvénients majeurs :

- l'existence de pertes en fonctionnement à vide (fonctionnement de stockage) d'où une autodécharge sensible (sauf pour la machine asynchrone et la machine à réluctance variable pure);
- une faible souplesse de réglage des échanges d'énergie par le réglage du courant inducteur ;
- un mauvais rendement à faible charge.

L'invention vise à créer un moteur/générateur électromagnétique pour le stockage électromécanique de l'énergie électrique à très haut rendement en particulier à faible autodécharge, qui soit intégrable à un volant d'inertie.

A cet effet, la machine doit répondre simultanément aux critères suivants :

- faibles pertes en fonctionnement à vide, c'est-à-dire sans courant, ce qui doit se traduire par une absence de pertes magnétiques dans le fer et dans le bobinage et très peu de pertes mécaniques,
- pas de pertes au rotor malgré des hautes vitesses de rotation (vitesse périphérique proche de celle du volant d'inertie),
- pas de perturbation des paliers magnétiques par des forces parasites,
- réglage indépendant du flux inducteur pour un meilleur contrôle des échanges d'énergie et un meilleur facteur de puissance (puissance apparente minimale du convertisseur électronique associé),
- bonne intégration à un volant d'inertie.

FR-A-1 445 327 divulgue une génératrice de courant alternatif qui comprend un corps, un arbre monté rotatif dans ledit corps, un noyau de stator annulaire monté dans le corps et destiné à soutenir plusieurs enroulements de stator à partir desquels, en fonctionnement, on obtient le courant alternatif de sortie de la génératrice, deux pièces polaires en forme de disques montés sur l'arbre et espacés axialement sur celui-ci de manière à réaliser, avec les extrémités du stator respectivement, un espace de passage, lesdites pièces polaires étant conformées de façon à définir plusieurs têtes polaires également espacés angulairement, et un bobinage de champ annulaire entourant l'arbre à une certaines distance de celui-ci, ledit bobinage de champ étant agencé pour être alimenté, en fonctionnement, avec un courant alternatif, l'agencement étant tel que, lorsque ledit bobinage de champ est excité et que l'arbre est entraîné en rotation, lesdits enroulements sont soumis à un flux magnétique variable mais unidirectionnel induisant ainsi dans ces enroulements un courant alternatif.

L'invention a donc pour objet une machine électrique formant moteur ou génératrice conforme à la revendication 1.

D'autres caractéristiques sont indiquées dans les revendications dépendantes.

L'invention sera mieux comprise à la lecture de la description qui va suivre, donnée uniquement à titre d'exemple et faite en se référant aux dessins annexés, sur lesquels :

- la Fig.1 est une vue en élévation et en coupe de la machine électrique associée à son volant d'inertie suivant l'invention ;
- la Fig.2 est une vue de dessus, avec arrachement partiel de la machine de la figure 1 ;
- la Fig.3 est une vue schématique du bobinage d'induit de la machine suivant l'invention ;
- la Fig.4 est une vue schématique développée linéairement d'une structure élémentaire de la machine suivant l'invention ;
- la Fig.5 est un diagramme montrant la variation du flux inducteur embrassée par deux spires de la structure de la figure 4 en fonction de la position du rotor de la machine suivant l'invention ;

- les Figs.6a et 6b sont des diagrammes représentant les cycles de conversion d'énergie de la machine suivant l'invention dans deux cas d'alimentation en courant d'induit sinusoïdal ou en créneaux ;
- la Fig.7 est un diagramme montrant les perméances P1 et P2 vues respectivement par les deux spires de la structure de la figure 4 en fonction de la position du rotor ;
- la Fig.8 est une vue en élévation et en coupe d'une machine suivant l'invention de forme générale cylindrique ;
- la Fig.9 est une vue en coupe transversale de la machine de la figure 8 ;
- la Fig.10 est une demi-vue en élévation et en coupe d'une variante de la machine de la figure 8 ;
- la Fig.11 est une vue schématique développée de la machine de la figure 10 ;
- la Fig.12 est une vue schématique en perspective d'une machine électrique linéaire suivant l'invention ;
- la Fig.13 est une vue schématique montrant la circulation du courant dans la machine de la figure 12 ;
- la Fig.14 est une vue schématique en coupe transversale d'une variante de la machine électrique linéaire de la figure 12;
- la Fig.15 est une vue schématique en perspective éclatée montrant un mode de réalisation particulier d'un bobinage plat utilisable dans la machine de la figure 1;
- la Fig.16 est une vue partielle de la figure 15 montrant la structure du bobinage plat de la figure 15;
- la Fig.17 est une vue partielle en coupe d'une machine électrique analogue à celle de la figure 1 mais avec un bobinage plat mettant en oeuvre l'agencement de la figure 15 ;
- la Fig.18 est un graphique montrant la détermination de la largeur des conducteurs placés dans la partie active d'un bobinage tel que celui de la figure 16 ; et
- la Fig.19 est un graphique montrant l'allure de la force magnétomotrice optimisée, rendue la plus sinusoïdale possible grâce à la détermination graphique de la largeur des conducteurs de la figure 18.

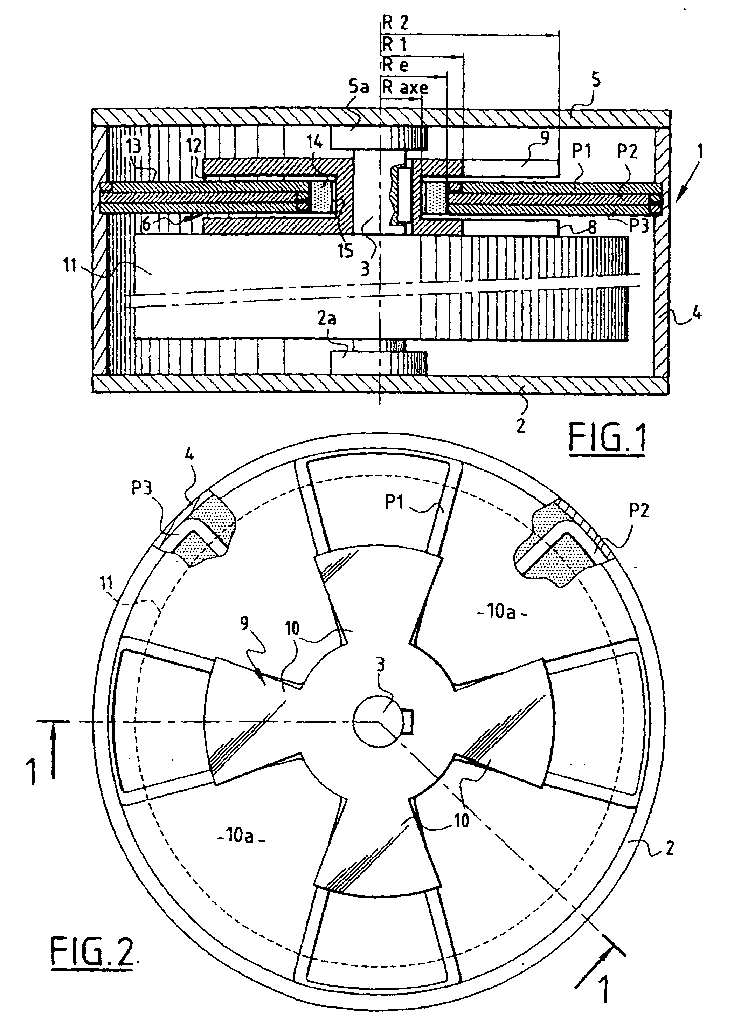

La machine représentée à la figure 1 comporte un boîtier 1 formé d'un premier flasque 2 supportant un palier inférieur 2a pour la rotation d'un arbre 3 et sur lequel est monté un tube 4 définissant la paroi latérale du boîtier 1 et un second flasque 5 formant couvercle et supportant un palier supérieur 5a.

Sur l'arbre 3 sont montés deux disques dentés 8, 9 comprenant chacun quatre dents 10 (Fig.2) séparées par des échancrures 10a.

Le disque inférieur 8 est solidaire d'un volant d'inertie 11 qui, dans cet exemple est de forme cylindrique.

Dans l'espace 12 ménagé entre les disques 8,9 est disposé un bobinage d'induit plat réparti 13 entourant un bobinage inducteur global 14 en forme de solénoïde.

Le bobinage inducteur 14 est disposé entre les deux disques dentés 8,9, de manière à entourer l'arbre 3, avec un jeu mécanique 15.

Le bobinage d'induit 13 est formé de spires décalées angulairement et régulièrement réparties.

Ainsi qu'on le voit à la figure 1, les trois phases P1, P2 et P3 du bobinage d'induit 13 sont disposées selon trois plans superposés les uns aux autres.

Elles peuvent également être disposées dans un même plan.

Le bobinage d'induit est composé d'un bobinage polyphasé fixe, triphasé dans le présent exemple.

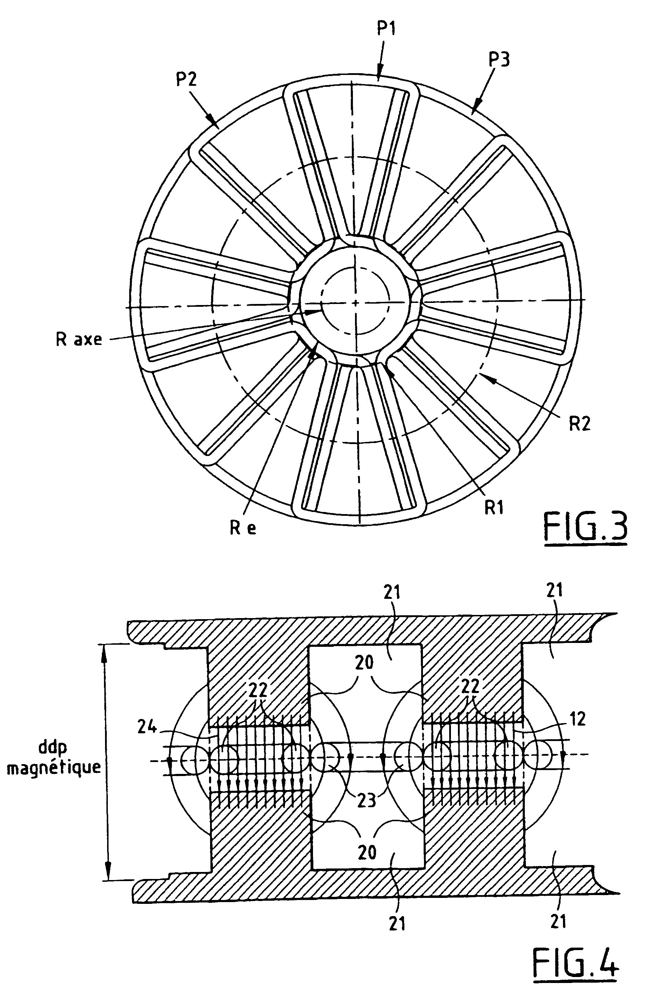

Le bobinage donné à titre d'exemple à la figure 3 est un bobinage pour moteur/génératrice à quatre paires de pôles.

On voit sur cette figure, les trois phases P1, P2, P3 du bobinage réparties uniformément suivant sa périphérie.

Le principe de fonctionnement de la machine suivant l'invention repose sur la commutation de flux.

L'alternance de flux d'excitation vue par une phase du bobinage d'induit fixe est obtenue à partir d'une excitation par courant continu et par le déplacement du circuit réluctant pur.

Afin d'illustrer ce fonctionnement, on va considérer une structure élémentaire représentative montrée sur la figure 4 composée de dents magnétiques 20, d'encoches 21 et de spires élémentaires 22,23.

L'entrefer magnétique 12 déterminé par le jeu mécanique entre les dents magnétiques 20 augmenté de la hauteur des spires 22,23, est magnétisé à vide par un bobinage d'excitation qui, sur la figure 4 est représenté par la différence de potentiel d.d.p magnétique aux bornes des deux rotors dentés 8,9 (Fig.1).

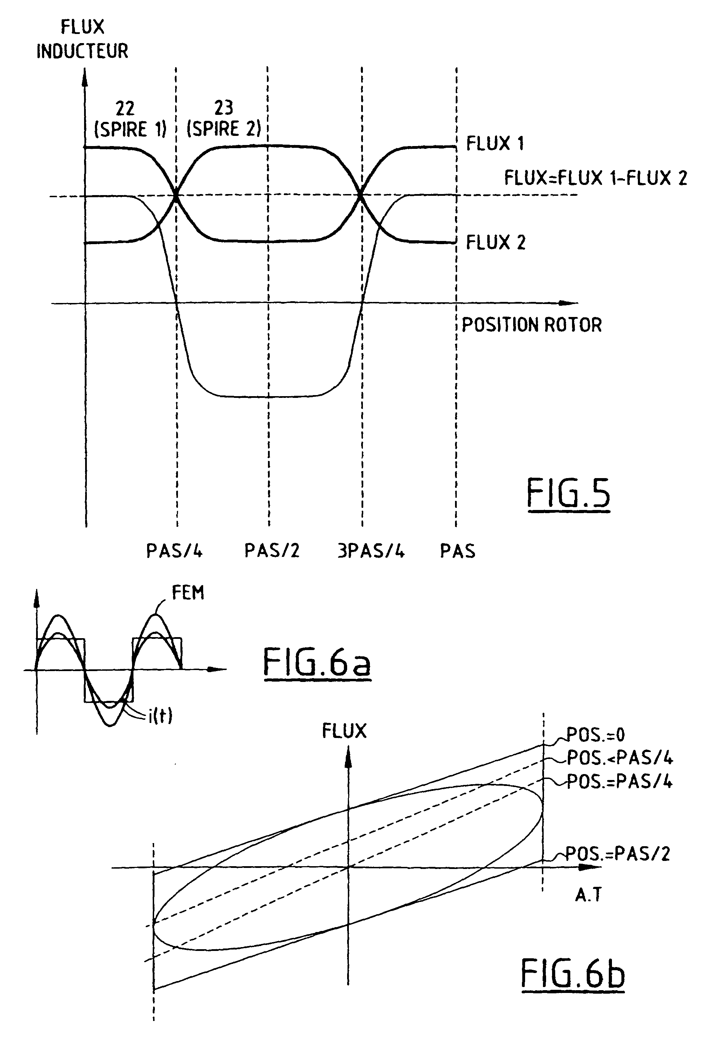

La variation du flux inducteur dans les spires 22 et 23 est représentée à la figure 5.

Ainsi le flux inducteur total vu par les deux spires en série de l'agencement de la figure 4, formant le bobinage d'induit correspond à la différence des flux des deux spires.

$$FLUX = FLUX\ 1 - FLUX\ 2$$

Il est alternatif de composante moyenne nulle.

A partir de cette variation du flux inducteur total, on peut représenter les caractéristiques extrêmes du cycle de fonctionnement du dispositif dans le plan « flux - ampères-tours ».

On obtient ainsi la forme des figures 6a et 6b, la figure 6a représentant le courant d'induit d'alimentation d'une phase (sinusoïdal ou en créneaux) synchronisé avec la force-électromotrice de cette même phase, la figure 6b montrant la variation du flux en fonction des ampères-tours. L'aire du cycle ainsi décrit est égale à l'énergie convertie par période d'alimentation.

En ce qui concerne l'effet de réluctance variable, on peut montrer que ce dernier est négligeable dans cette structure.

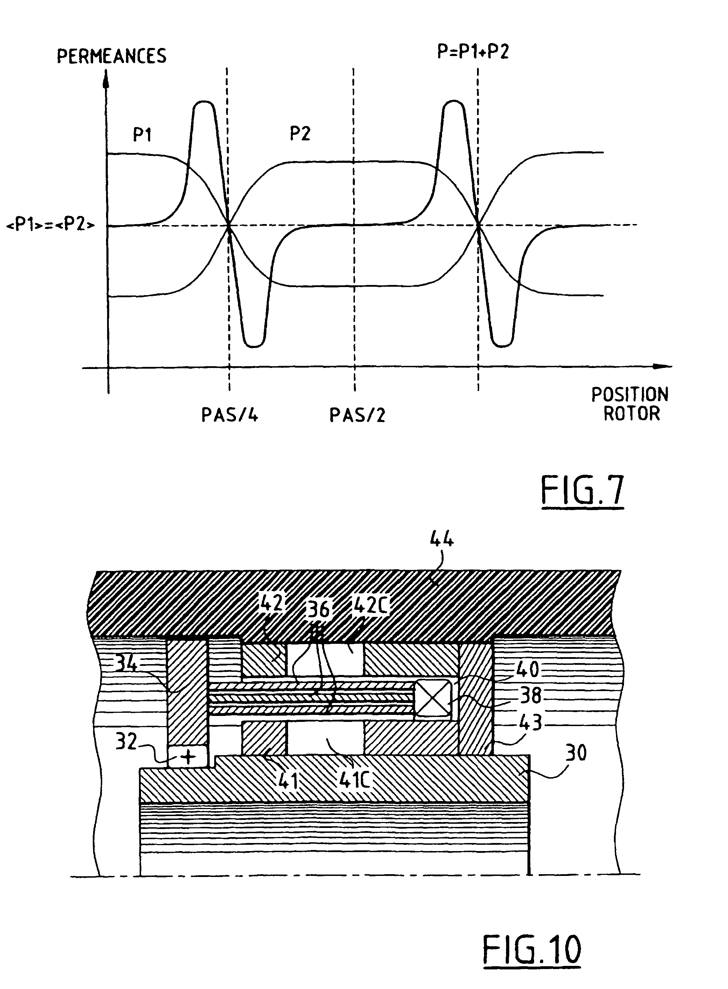

En effet, sur la figure 7, on a représenté la variation des perméances de chaque spire élémentaire présentée précédemment ainsi que la perméance totale qui représente la perméance d'une phase du bobinage d'induit et est égale à la somme des perméances élémentaires.

Pour une répartition sinusoïdale, en fonction de la position du rotor, des perméances élémentaires, la perméance totale est constante.

Pour une répartition différente, elle est peu variable comme l'illustre la figure 7 et comme on a pu le constater par calcul par éléments finis et lors de l'expérimentation.

On notera cependant que si la perméance totale d'une phase n'est pas constante et donc dépendante de la position du rotor, il existe un couple supplémentaire dit réluctant résultant d'un couplage du champ magnétique induit avec le circuit magnétique.

La structure de moteur/générateur suivant l'invention combine quatre aspects fondamentaux, à savoir :

- rotor passif ne comportant ni aimant, ni bobinage, donc mécaniquement très robuste supportant des hautes vitesses de rotation,
- pas d'efforts parasites rendant ainsi le système compatible avec les paliers magnétiques,
- réglage indépendant du flux inducteur,
- toutes les pièces ferromagnétiques sont tournantes et voient donc un champ magnétique constant, en conséquence de quoi les pertes fer sont nulles.

Grâce à l'invention, il est possible d'allonger sensiblement la durée de stockage d'énergie et d'envisager de ce fait un stockage électromécanique à très grande autonomie.

Le coût du dispositif suivant l'invention est également très bas en raison de sa grande simplicité de construction et de l'utilisation de matériaux peu coûteux.

Le dispositif suivant l'invention présente par ailleurs les particularités suivantes :

- très peu de pertes à vide car pas de perte magnétique à vide et seulement des pertes aérodynamiques (celles-ci sont néanmoins très réduites si la pression est faible grâce à un vide partiel),
- facilité d'étanchéité,
- réglage indépendant de l'excitation ce qui donne un degré de liberté supplémentaire dans le réglage du transfert d'énergie,
- efforts parasites axiaux ou radiaux négligeables entre les parties mobiles et les parties fixes,
- les vibrations sont négligeables,
- excellente compatibilité avec les paliers magnétiques,

- intégration aisée de paliers magnétiques,
- topologie entièrement ou partiellement intégrable à un volant d'inertie.

Les domaines d'application du dispositif suivant l'invention concernent le stockage électromécanique d'énergie électrique pour :

- des consommateurs non connectés au réseau de distribution et alimentés par des énergies renouvelables telles que l'énergie photo-voltaïque, éolienne ou autre ;
- des consommateurs reliés au réseau de distribution afin d'assurer un lissage de la consommation, d'assurer une autonomie en cas de coupure et une possibilité de production d'électricité par sources d'énergie renouvelables.

L'invention permet d'avoir un dispositif de stockage à très grand nombre de cycles de charge-décharge d'une très faible auto-décharge, de permettre un recyclage du produit aisé en fin de vie et enfin un produit de construction relativement simple composé de matériaux à faible coût tels que l'acier, le cuivre et autre.

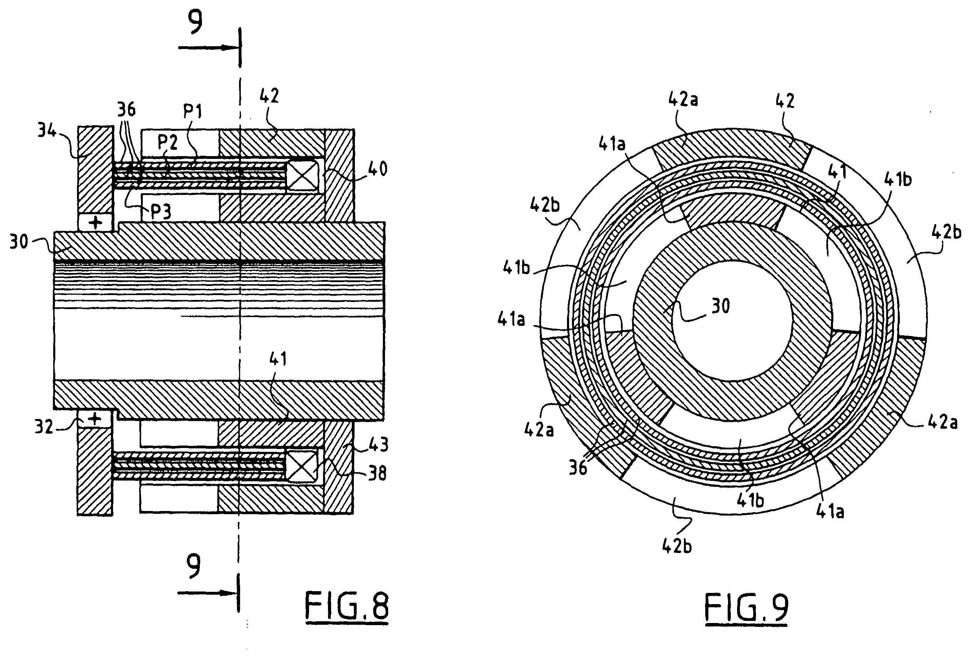

La machine représentée à la Fig.8 est une variante de la machine décrite en référence aux figures 1 à 4.

Elle comporte un arbre creux 30 monté à rotation par l'intermédiaire d'un roulement 32 dans un flasque fixe 34 en matériau amagnétique portant un bobinage d'induit polyphasé 36 dont les trois phases P1,P2,P3 sont réalisées selon trois cylindres coaxiaux entourant l'arbre 30.

A l'extrémité du bobinage d'induit 36 opposée au flasque amagnétique 34 est disposé un bobinage inducteur fixe 38.

Les bobinages d'induit et inducteurs 36,38 sont disposés dans l'entrefer défini par un intervalle 40 ménagé entre deux cylindres en matériau ferromagnétique coaxiaux, dentés 41,42 et mobiles en rotation avec l'arbre 30, réunis par un flasque 43 en matériau ferromagnétique.

Le cylindre denté 41 et le flasque 43 sont portés par l'arbre 30. Selon une variante, le cylindre intérieur 43 peut être confondu avec l'arbre 30 qui est alors en matériau magnétique.

Les cylindres dentés 41 et 42 comportent des dents respectives 41a,42a qui, comme représenté à la figure 9 sont au nombre de trois dans le présent exemple et sont séparées par des encoches respectives 41b, 42b.

L'arbre 30, les cylindres 41,42 et le flasque 43 forment le rotor de la machine.

Les bobinages d'induit 36 et inducteur 38 portés par le support amagnétique 34 forment le stator de la machine.

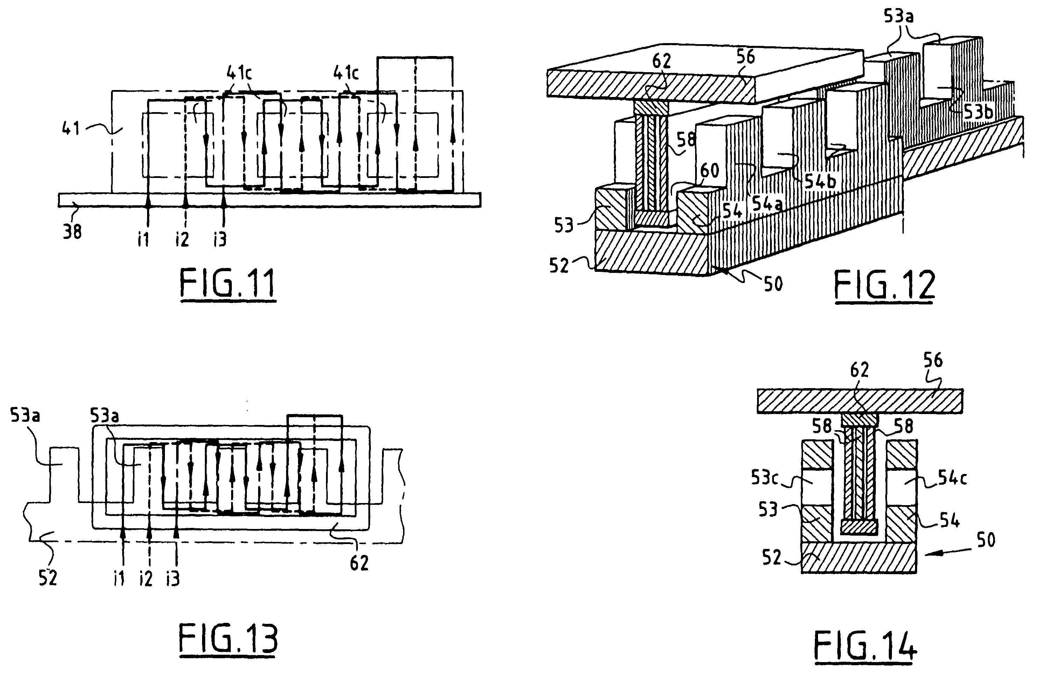

La machine représentée à la figure 10 est semblable à celle décrite en référence aux figures 8 et 9 à l'exception du fait qu'au lieu de comporter des dents et des encoches, ses cylindres 41,42 comportent des trous 41c,42c régulièrement répartis à leur périphérie. Le rôle des trous 41c,42c est le même que celui des encoches 41b,42b dans le mode de réalisation de la figure 8.

Cette variante de la machine suivant l'invention est adaptée pour recevoir un élément cylindrique creux de stockage d'énergie 44 composé de matériau à haute résistance mécanique (HRM) du type métal à HRM ou fibres de carbone ou encore fibres de verre.

Sur la figure 11, on a représenté une vue développée de la machine de la figure 10.

On voit sur cette figure la circulation des courants de l'induit i1,i2,i3 dans les trois phases P1, P2, P3 du bobinage d'induit décalées les unes par rapport aux autres à intervalles réguliers.

La figure 12 est une vue schématique en perspective d'une machine linéaire suivant l'invention.

Cette machine comporte un rail 50 en matériau ferromagnétique formé par exemple d'une semelle horizontale 52 et de deux plaques latérales verticales 53,54 pourvues de dents 53a,54a séparées par des encoches 53b,54b.

En supposant pour le besoin de la description que le rail 50 est fixe, la machine comporte en outre un support amagnétique mobile 56 horizontal qui porte un bobinage d'induit vertical 58 s'étendant dans un entrefer 60 ménagé par l'intervalle entre les plaques latérales 53,54 du rail 50 et auquel est associé un bobinage inducteur 62.

Le bobinage d'induit 58 est polyphasé, triphasé dans le présent exemple et comme représenté sur la figure 13, entouré par le bobinage inducteur.

L'ensemble formé par le support amagnétique 56, le bobinage d'induit 58 et le bobinage inducteur est mobile en translation par rapport au rail 50.

On peut cependant envisager une machine dont le bobinage d'induit, et le bobinage inducteur solidaires de leur support seraient fixes et dont le rail en matériau ferromagnétique serait mobile.

Ainsi qu'on le voit à la figure 13,les courants i1,i2,i3 des trois phases P1,P2,P3 de l'induit se comportent dans la machine linéaire de la figure 12 de la même manière que dans la machine tournante des figures 8 ou 10.

La machine représentée schématiquement à la figure 14 est en tous points semblable à la machine linéaire décrite en référence aux figures 12 et 13 à l'exception du fait qu'au lieu de comporter des dents et des encoches comme la machine de la figure 12, elle comporte dans les plaques ferromagnétiques latérales 53,54 des trous 53b,54b disposés à intervalles réguliers.

Ainsi, l'invention s'applique aussi bien à des machines à champ axial de topologie discoïde telle que celle utilisée pour le stockage d'énergie, qu'à des machines à champ magnétique radial, du type cylindrique, ou à champ transversal telles que les machines à déplacement linéaire.

Dans ces machines, toutes les pièces ferromagnétiques voient un champ magnétique constant.

Dans les machines autres que les machines à déplacement linéaire, les bobinages d'induit et inducteur sont fixes.

Les bobinages d'induit et inducteur se trouvent dans l'entrefer défini dans l'espace entre les éléments ferromagnétiques formés par les disques ferromagnétiques pour la machine discoïde, les cylindres ferromagnétiques pour la machine cylindrique et les plaques ferromagnétiques pour la machine linéaire.

Le flux inducteur de la machine est réglable.

Le bobinage d'induit est polyphasé et génère un champ tournant dans une machine tournante ou un champ glissant dans une machine linéaire.

Le bobinage inducteur est centralisé et alimenté par un courant continu.

Le bobinage d'induit est une pièce maîtresse de la machine suivant l'invention.

Il conditionne l'allure de la force magnétomotrice créée par l'induit et l'allure de la force électromotrice induite par l'inducteur.

Les pertes dépendent donc, pour une large part, du type et de la forme du bobinage choisi.

Un bobinage dans le fer présenterait un niveau de pertes d'origine magnétique excessif aux vitesses requises pour le stockage électromécanique d'énergie.

La machine, moteur/générateur suivant l'invention utilise un bobinage à support amagnétique.

La solution à bobinage filaire tel que celui de la machine de la figure 1, pose pour la machine considérée appelée actionneur, le problème de l'encombrement dû au chevauchement des têtes de bobines intérieures.

Une telle solution conduit à une sous utilisation du volume d'entrefer.

Afin de s'affranchir de ce problème de chevauchement, on propose de répartir les bobinages inducteurs et d'induit sur une même plaque de matière isolante telle que de l'époxy qui assure aussi la rigidité mécanique en utilisant par exemple un procédé de gravure de circuits imprimés.

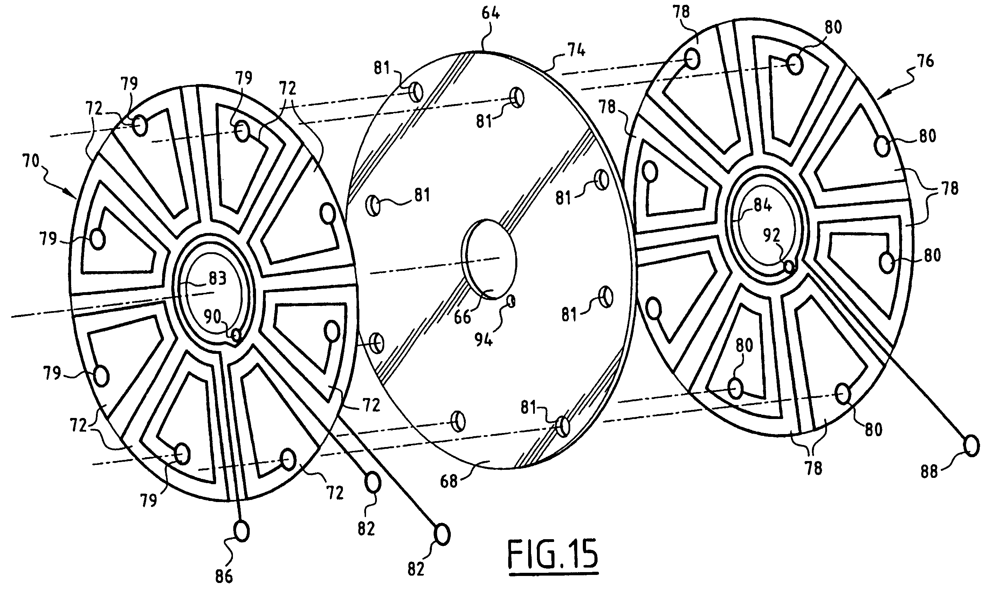

Le bobinage plat représenté à la figure 15 comporte une plaque en forme de disque 64 en matière isolante telle que de l'époxy pourvue d'un orifice central 66 pour le passage d'une pièce de liaison de deux disques dentés tels que les disques magnétiques 8,9 de la machine de la figure 1.

Sur une première face 68 de la plaque 64 est réalisée par exemple, par un procédé de gravure de circuits imprimés, une première partie 70 d'un bobinage d'induit dont les divers pôles 72 sont disposés à plat sur la plaque 64 et répartis à intervalles angulaires réguliers sur ladite plaque.

Sur une seconde face 74 de la plaque 64 est réalisée par le même procédé, une seconde partie 76 du bobinage d'induit dont les pôles 78 sont également disposés à plat sur la plaque 64 avec le même décalage angulaire que celui des pôles 72 de la première partie 70 du bobinage d'induit.

Chacun des pôles 72,78 d'une face de l'ensemble ou galette ainsi obtenu est bobiné en sens inverse de deux pôles adjacents, ce qui crée une alternance de pôles magnétiques.

Les pôles 72,78 créés par les deux faces de la galette se superposent. Ils sont donc bobinés dans le même sens.

En outre, les connexions intérieures des pôles 72 d'une face 68 qui sont matérialisées par les bornes 79 sont reliées aux connexions ou bornes intérieures 80 des pôles 78 correspondants de l'autre face 74 au travers de trous de traversée 81 ménagés dans la plaque 64 de matériau isolant et disposés à la périphérie de celle-ci en regard des bornes 79,80 des pôles 72,78 des deux parties 70,76 de bobinage d'induit.

Le nombre de pôles 72,76 d'une galette est égal au double du nombre de dents d'un disque rotorique tel que les disques 8,9 de la machine de la figure 1.

Le bobinage d'induit ainsi constitué comporte deux bornes extérieures 82 reliées à deux pôles 72 voisins de la première partie 70. Chacune des parties 70 et 76 du bobinage d'induit a une configuration circulaire et comporte une zone centrale dans laquelle est réalisée par la même technique de gravure de circuits imprimés, une partie 83,84 de bobinage inducteur.

Chaque partie 83,84 de bobinage inducteur comporte une borne extérieure 86,88 et une borne intérieure 90,92. Les bornes intérieures 90,92 sont connectées entre elles au travers d'un orifice de traversée 94 ménagé dans la plaque isolante 64.

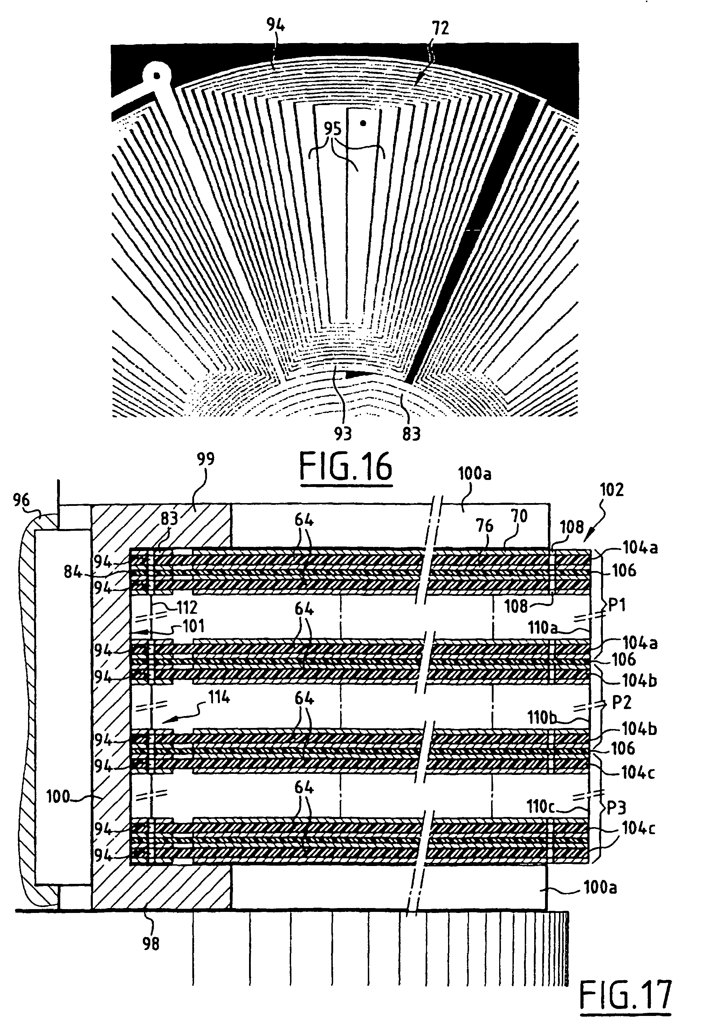

Comme représenté sur la vue partielle de la figure 16, sur laquelle on voit un exemple d'une face d'une galette telle que celle de la figure 15, un pôle tel qu'un pôle 72 du bobinage d'induit est formé par un conducteur imprimé enroulé à plat qui comporte des portions périphériques internes 93 et externes 94 de section constante et des portions radiales 95 de section variable se rétrécissant de la périphérie vers le centre.

En outre, les largeurs des portions 95 du conducteur imprimé radiales ou transversales au déplacement relatif entre la partie fixe et la partie mobile de la machine, diminuent à partir du milieu d'un pôle vers ses bords.

Une telle répartition optimisée des conducteurs permet d'obtenir une force magnétomotrice la plus sinusoïdale possible.

On peut cependant envisager d'autres critères d'optimisation.

La forme de la force magnétomotrice que l'on souhaite obtenir conditionne la section de chacun des conducteurs placés dans la partie active c'est à dire la partie placée sous la zone dentée des disques rotoriques. La détermination de cette section, pour un rayon donné, peut être effectuée à partir d'une simple analyse graphique.

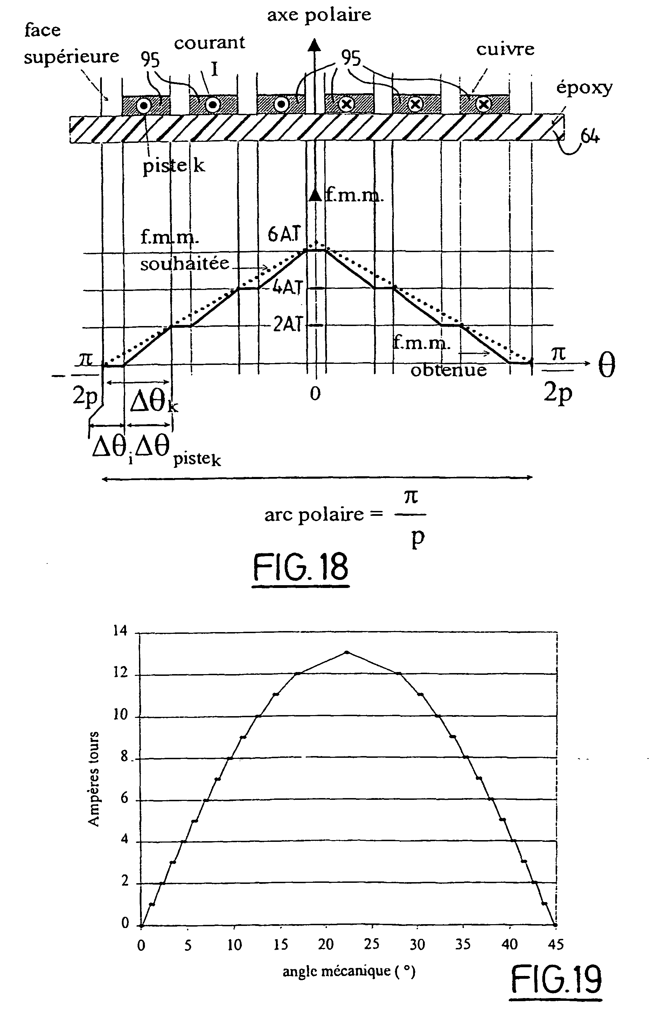

Pour une force magnétomotrice (f.m.m.) de forme souhaitée, telle que celle représentée en pointillés à la figure 18 et pour une épaisseur de piste constante, la largeur de chaque piste est obtenue de la manière suivante :

    i. l'intersection de la courbe représentant la force magnétomotrice désirée avec les niveaux entiers des ampères tours détermine la valeur $\Delta\theta_k$,

ii. la largeur de la $k^{\text{ième}}$ piste, notée $\Delta\theta_{\text{piste } k}$, est obtenue en retranchant de $\Delta\theta_k$ la valeur de l'écart $\Delta\theta_i$ correspondant à l'écart nécessaire à l'isolation électrique entre deux pistes.

$$\Delta\theta_{\text{piste } k} = \Delta\theta_k - \Delta\theta_i$$

A titre d'exemple, la figure 18 montre, dans le cas des machines tournantes, comment obtenir la section des conducteurs formant un pôle dans le cas où chaque pôle comporte trois spires et où la force magnétomotrice souhaitée est triangulaire. Le haut de la figure représente physiquement une face du bobinage vu en coupe et pour un rayon donné.

Dans cet exemple, les conducteurs 95 réalisés sous forme de pistes de cuivre sont disposés à la surface d'une plaque non magnétique 64 en époxy par exemple, avec un pas angulaire $\Delta\theta_i$ constant, nécessaire à l'isolation électrique entre pistes.

Dans cet exemple précis, la largeur des pistes obtenue est alors constante.

Dans le cas où la force magnétomotrice est non triangulaire, la largeur des pistes variables est déterminée à partir de la méthode décrite précédemment. Ainsi, la répartition des conducteurs du moteur/générateur considéré dont une face d'une galette est représentée à la figure 16, a été optimisée pour obtenir, à partir de 13 spires par pôle et par phase, une force magnétomotrice représentée à la figure 19 la plus sinusoïdale possible.

La figure 17 est une vue partielle en coupe à plus grande échelle d'une machine analogue à celle de la figure 1.

On voit sur la figure 17, l'arbre 96 portant deux disques dentés 98,99 solidaires d'un moyeu 100 claveté sur l'arbre et pourvus d'ouvertures 100a.

Dans l'espace 101 ménagé entre les disques dentés 98 et 99, est disposé un bobinage d'induit triphasé 102 dont les trois phases $P_1$, $P_2$, $P_3$, sont formées chacune de plusieurs galettes 104a, 104b, 104c respectives telles que celle décrite en référence à la figure 15, empilées les unes sur les autres avec interposition entre les galettes 104a, 104b,104c d'une couche 106 d'isolant électrique.

Sur la figure 17, seules les galettes externes de chaque empilement des phases P1, P2, P3 sont représentés.

Bien entendu, le bobinage peut ne comporter qu'une galette par phase.

Dans le cas d'une machine monophasée, il comporte au moins une galette du type précité.

Les galettes 104a,104b,104c de chaque phase P1,P2,P3 comportent chacune un bobinage d'induit 70,76 et un bobinage inducteur 83,84 formés chacun de deux parties imprimées sur les deux faces d'un disque 64 en matériau isolant de la manière décrite en référence à la figure 15.

Les deux parties 70,76 de chaque bobinage d'induit sont connectées entre elles par des conducteurs de traversée 108. Les bobinages d'induit des galettes 104a formant une même phase P1 sont connectés les uns aux autres en série par des conducteurs 110a.

De même, les bobinages d'induit des galettes 104b et 104c formant respectivement les phases P2 et P3 sont connectés les uns aux autres par des conducteurs 110b et 110c.

Les bobinages inducteurs 83,84 de l'ensemble des galettes 104a à 104c formant les trois phases, sont connectés en série par des conducteurs 112 et constituent un bobinage inducteur centralisé 114.

Le nombre de galettes de circuit imprimé utilisées pour réaliser les phases P1,P2,P3 est choisi de manière que le bobinage obtenu occupe un volume maximal entre les disques dentés 98,99.

Grâce à l'utilisation et à l'empilement de plusieurs circuits imprimés à double face du type décrit en référence à la figure 15, on évite le chevauchement des têtes de bobines.

Dans le cas d'une machine triphasée selon le déplacement, les phases P1, P2, P3 sont décalées entre elles d'une valeur correspondant à deux tiers de pôle tels que l'un des pôles 72 du bobinage de la figure 15.

Le type de bobinage qui vient d'être décrit en référence aux figures 15 à 17 est directement transposable par simple développement aux machines linéaires telles que celles décrites en référence aux figures 11 à 14.

Dans le cas d'une machine linéaire, le décalage entre pôles se fait selon la direction de déplacement relatif de la partie fixe et de la partie mobile.

La technologie décrite en référence aux figures 15 à 17 permet d'obtenir les avantages suivants :

- un bobinage inducteur et induit disposés sur une même pièce non magnétique et non conductrice d'électricité (époxy par exemple) et qui assure la rigidité mécanique ;

- une force magnétomotrice quasiment sinusoïdale obtenue de façon très simple par l'utilisation de pistes de sections variables favorable à la minimisation des pertes magnétiques dans les disques en fer ;

- une meilleure utilisation de l'espace bobinable ;

- une possibilité d'augmenter les surfaces d'échange thermique avec l'extérieur en augmentant la section des têtes de bobines ;

- une diminution des pertes Joule par l'accroissement de la section des têtes de bobines ;

- une simplicité de réalisation accrue favorable à l'automatisation et à la réduction du coût de réalisation.

## Revendications

**1.** Machine électrique formant moteur ou génératrice comprenant une partie fixe et une partie mobile, dans laquelle l'une des parties fixe et mobile (4,12,8,9 ; 34,36,41,42 ; 50,56,58; 98,99,100) est passive et comprend deux pièces (8,9 ; 41,42 ; 53,54; 98,99) définissant entre elles un intervalle régulier (12 ;40 ;60; 101), lesdites pièces étant reliées entre elles par une pièce de liaison (3 ;43 ;52; 100) et l'autre desdites parties fixe et mobile comporte un bobinage d'indult (13 ;36 ;58;102) polyphasé générant un champ magnétique variable ainsi qu'un bobinage inducteur centralisé (14 ;38 ;62; 114) alimenté par un courant continu, lesdits bobinages d'induit et inducteur étant disposés dans un entrefer défini par l'intervalle régulier (12 ;40 ;60; 101), les deux pièces (8,9; 41,42 ; 53,54; 98,99) définissant un intervalle régulier et la plèce de liaison (3 ;43 ; 52; 100) étant en matériau ferromagnétique, toutes les pièces ferromagnétiques de la machine étant situées sur celle des parties fixe et mobile comprenant les deux pièces (8,9 ; 41,42 ; 53,54; 98,99) définissant ledit intervalle régulier, et une au moins desdites pièces en matériau ferromagnétique (8,9 ; 41,42 ; 53,54; 98,99) définissant ledit intervalle régulier étant pourvue d'ouvertures (10a ;41b,42b ; 41c,42c ; 53b,54b ; 53c,54c; 100a).

**2.** Machine tournante suivant la revendication 1, comprenant un stator et un rotor, **caractérisée en ce que** ladite partie passive (3 ,8,9 ;30,41,42,43) est un rotor passif comprenant deux pièces de révolution coaxiales (8,9 ;41,42) en matériau ferromagnétique dont au moins une est pourvue d'ouvertures (10a ;41 b ;42b 41c,42c) et reliées entre elles par une pièce de liaison (3 ;43) coaxiale aux deux pièces de révolution également en matériau ferromagnétique et l'autre desdites parties est un stator qui comporte, disposés dans un entrefer défini par l'intervalle régulier ménagé entre les deux pièces de révolution, un bobinage d'induit fixe (13 ;36) générant un champ tournant ainsi qu'un bobinage inducteur (14 ;38) également fixe.

**3.** Machine tournante suivant la revendication 2, **caractérisée en ce que** toutes les pièces ferromagnétiques (3,6,8,9 ;41,42,43) sont tournantes.

**4.** Machine tournante suivant les revendications 2 et 3, **caractérisée en ce que** le rotor est composé de deux disques férromagnétiques (8,9) dont au moins un est denté.

**5.** Machine tournante suivant les revendications 2 à 4, caractérisée ce que les disques tournants (8,9) sont calés sur un arbre (3) en matériau ferromagnétique.

**6.** Machine tournante suivant les revendications 2 à 5, caractérisée ce que les bobinages d'indult (13) et inducteur (14) fixes sont disposés dans l'espace (12) entre les disques (8,9).

**7.** Machine tournante suivant l'une des revendications 2 à 4, **caractérisée en ce que** le bobinage d'induit (13) est un bobinage polyphasé dont les phases (P1, P2, P3) sont disposées dans un même plan ou selon des plans superposés dans l'entrefer (12) ménagé par les disques dentés (8,9) tournants.

**8.** Machine suivant l'une des revendications 2 à 7, **caractérisée en ce que** les phases (P1,P2,P3) du bobinage d'induit (13) sont formées de spires décalées angulairement et régulièrement réparties selon la périphérie de la machine.

**9.** Machine suivant l'une des revendications 2 à 8, **caractérisée en ce que** le bobinage inducteur (14) est disposé autour de l'arbre (3) et entouré par le bobinage d'induit (13).

**10.** Machine suivant l'une des revendications 2 à 9, **caractérisée en ce que** le bobinage inducteur (14) est un bobinage global fixe en forme de solénoïde.

**11.** Machine suivant la revendication 2 , **caractérisée en ce que** le rotor comporte un arbre (30) entouré par deux cylindres en matériau ferromagnétique (41,42) coaxiaux pourvus de dents (41a,42a) et d'échancrures (41b,42b) régulièrement réparties à une de leurs extrémités et un flasque de liaison (43) en matériau ferromagnétique.

**12.** Machine suivant la revendication 2, **caractérisée en ce que** le rotor comporte un arbre (30) entouré par deux cylindres en matériau ferromagnétique (41,42) pourvus de trous (41c,42c) régulièrement répartis à une de leurs extrémités et un flasque de liaison (43) en matériau ferromagnétique.

**13.** Machine suivant l'une des revendications 11 et 12, **caractérisée en ce que** le cylindre intérieur (41) en matériau ferromagnétique est confondu avec l'arbre (30) du rotor.

**14.** Machine électrique suivant la revendication 1, de type à déplacement linéaire, **caractérisée en ce que** la partie fixe comporte un rail (50) en matériau ferromagnétique comprenant des parois latérales (53,54) pourvues d'ouvertures (53b,54b ; 53c,54c) régulièrement réparties sur sa longueur et la partie mobile comporte un support (56) en matériau amagnétique, portant un bobinage d'induit (58) et un bobinage inducteur (62) disposés dans un entrefer défini par l'intervalle régulier (60) entre les parois latérales (53,54).

**15.** Machine électrique suivant la revendication 14, **caractérisée en ce que** les ouvertures prévues dans les parois latérales (53,54) du rail (50) sont des échancrures (53b,54b) séparant des dents (53a, 54a) dudit rail.

**16.** Machine électrique suivant la revendication 14, **caractérisée en ce que** les ouvertures prévues dans les parois latérales (53,54) du rail (50) sont des trous (53c,54c) ménagés à intervalles réguliers dans lesdites parois latérales.

**17.** Machine électrique suivant l'une des revendications 1 à 10 et 14 à 16, **caractérisée en ce que** les bobinages d'indult et inducteur (102,114) sont formés par empilement et interconnexion de galettes (104a,104b,104c) à raison d'au moins une galette par phase, les galettes comprenant chacune deux parties (70,76) de bobinage d'induit et deux parties (83,84) de bobinage inducteur formées par des circuits imprimés réalisés sur les deux faces d'une plaque de matériau isolant (64).

**18.** Machine électrique de type polyphasé suivant la revendication 17, **caractérisée en ce que** chaque phase (P1,P2,P3) du bobinage de la machine, est formée par l'empilement et l'interconnexion de galettes (104a,104b,104c) correspondantes et décalage selon le déplacement des empilages de galettes des différentes phases (P1,P2,P3) les unes par rapport aux autres.

**19.** Machine électrique suivant l'une des revendications 17 et 18, **caractérisée en ce que** les parties de bobinage d'induit (70,76) et les parties de bobinage inducteur (83,84) d'une galette sont reliées entre elles par des conducteurs de traversée engagés dans des trous de traversée (82,94) ménagés dans la plaque isolante (64).

**20.** Machine électrique suivant l'une des revendications 17 à 19, **caractérisée en ce que** chaque partie (70,76) du bobinage d'induit de chaque galette comporte des pôles (72,78) répartis à intervalles réguliers sur la plaque de matériau isolant (64) chacun des pôles (72,78) d'une face étant bobiné dans le sens inverse des deux pôles qui lui sont adjacents créant ainsi une alternance des pôles magnétiques.

21. Machine électrique suivant la revendication 20, **caractérisée en ce que** les pôles (72,78) des deux faces d'une galette se superposent et sont bobinés dans le même sens deux à deux.

22. Machine électrique suivant la revendication 21, **caractérisée en ce que** les largeurs des portions (95) du connecteur imprimé transversales au déplacement diminuent à partir du milieu de chaque pôle vers ses bords.

23. Machine électrique tournante suivant l'une des revendications 17 à 22, **caractérisée en ce que** chaque pôle (72,78) de bobinage d'induit d'une galette est formé par un conducteur imprimé bobiné à plat qui comporte des portions radiales (95) de section variable se rétrécissant de la périphérie vers le centre de ladite galette.

24. Machine électrique suivant la revendication 22, **caractérisée en ce que** pour une forme de la courbe de la force magnétomotrice souhaitée et pour une épaisseur constante des conducteurs (95), la largeur $\Delta\theta_{\text{piste k}}$ desdits conducteurs est donnée par la relation $\Delta\theta_{\text{piste k}} = \Delta\theta_k - \Delta\theta_i$ dans laquelle $\Delta\theta_k$ est l'intersection de la courbe de la force magnétomotrice désirée avec un niveau entier des ampères tours, et $\Delta\theta_i$ est la valeur de l'écart entre deux conducteurs voisins nécessaire à l'isolation thermique entre deux pistes.

**Patentansprüche**

1. Elektrische Maschine, welche einen Motor oder Generator mit einem feststehenden Teil und einem beweglichen Teil bildet, bei der das eine von dem feststehenden und dem beweglichen Teil (4, 12, 8, 9; 34, 36, 41, 42; 50, 56, 58; 98, 99, 100) passiv ist und zwei Bauteile (8, 9; 41, 42; 53, 54; 98, 99) aufweist, die zwischeneinander einen gleichmäßigen Zwischenraum (12; 40; 60; 101) bilden, wobei die Bauteile durch ein Verbindungsteil (3; 43; 52; 100) untereinander verbunden sind, und bei der das andere von dem festsrehenden und dem beweglichen Teil eine mehrphasige Ankerwicklung (13; 36; 58; 102) aufweist, welche ein variables Magnetfeld erzeugt, sowie eine zentrale Erregerwicklung (14; 38; 62; 114), die mit einem Gleichstrom versorgt wird, wobei die Ankerwicklung und die Erregerwicklung in einem von dem gleichmäßigen Zwischenraum (12; 40; 60; 101) gebildeten Luftspalt angeordnet sind und die beiden Bauteile (8, 9; 41, 42; 53, 54; 98, 99) einen gleichmäßigen Zwischenraum bilden, und wobei das Verbindungsteil (3; 43; 52; 100) aus einem ferromagnetischen Material besteht, alle ferromagnetischen Bauteile der Maschine sich auf demjenigen von dem Feststehenden und dem beweglichen Teil befinden, welches die beiden Bauteile (8, 9; 41, 42; 53, 54; 98, 99) aufweist, welche den gleichmäßigen Zwischenraum bilden, und wobei mindestens eines der Bauteile aus ferromagnetischem Material (8, 9; 41, 42; 53, 54; 98, 99), welche den gleichmäßigen Zwischenraum bilden, mir Öffnungen (10a; 41b, 42b; 41c, 42c; 53b, 54b; 53c, 54c; 100a) versehen ist.

2. Rotierende Maschine nach Anspruch 1. mit einem Stator und einem Rotor, dadurch gekennzeichner, daß das passive Teil (3, 8, 9; 30, 41, 42, 43) ein passiver Rotor ist, welcher zwei koaxiale Umdrehungsteile (8, 9; 41, 42) aus einem ferromagnetischen Material aufweist, von denen mindestens eines mit Öffnungen (10a; 41b; 42b; 41c, 42c) versehen ist und die mit einem ebenfalls aus einem ferromagnerischen Material bestehenden, zu den beiden Umdrehungsteilen koaxialen Verbindungsteil (3; 43) miteinander verbunden sind, und von denen das andere der Teile ein Stator ist, welcher eine feststehende Ankerwicklung (13; 36) zum Erzeugen eines Drehfeldes sowie eine ebenfalls feststehende Erregerwicklung (14; 38) aufweist, die in einem Luftspalt angeordnet sind, welcher durch den zwischen den beiden Umdrehungsteilen geschaffenen gleichmäßigen Zwischenraum gebildet wird.

3. Rotierende Maschine nach Anspruch 2, **dadurch gekennzeichnet,** **daß** alle ferromagnetischen Bauteile (3, 6, 8, 9; 41, 42, 43) rotierende Teile sind.

4. Rotierende Maschine nach den Ansprüchen 2 und 3, **dadurch gekennzeichnet,** **daß** der Rotor aus zwei ferromagnetischen Scheiben (8, 9) zusammengesetzt ist, von denen mindestens eine eine Verzahnung aufweist.

5. Rotierende Maschine nach den Ansprüchen 2 bis 4, **dadurch gekennzeichnet,** **daß** die rotierenden Scheiben (8, 9) auf einer Welle (3) aus einem ferromagnerischen Material festgekeilt sind.

6. Rotierende Maschine nach den Ansprüchen 2 bis 5, **dadurch gekennzeichnet,** **daß** die feststehende Ankerwicklung (13) und die Erregerwicklung (14) in dem Raum (12) zwischen den Scheiben (8, 9) angeordnet sind.

7. Rntierende Maschine nach einem der Ansprüche 2 bis 4, **dadurch gekennzeichnet,**

**daß** die Ankerwicklung (13) eine mehrphasige Wicklung ist, deren Phasen (P1, P2, P3) in einer gleichen Ebene oder in übereinanderliegenden Ebenen in dem von den rotierenden, mit einer Verzahnung versehenen Scheiben (8, 9) geschaffenen Luftspalt (12) angeordnet sind.

8. Maschine nach einem der Ansprüche 2 bis 7, **dadurch gekennzeichnet,**
   **daß** die Phasen (P1, P2, P3) der Ankerwicklung (13) von Windungen gebildet sind, die in Winkelabständen versetzt und gleichmäßig über den Umfang der Maschine verteilt sind.

9. Maschine nach einem der Ansprüche 2 bis 8, **dadurch gekennzeichnet,**
   **daß** die Erregerwicklung (14) um die Welle (3) herum angeordnet und von der Ankerwicklung (13) umgeben ist.

10. Maschine nach einem der Ansprüche 2 bis 9, **dadurch gekennzeichnet,**
    **daß** die Erregerwicklung (14) eine feststehende Gesamtwicklung in Form einer Zylinderspule ist.

11. Maschine nach Anspruch 2, **dadurch gekennzeichnet,**
    **daß** der Rotor eine Welle (30), die von zwei koaxialen Zylindern (41, 42) aus einem ferromagnetischen Material umgeben ist, welche mit gleichmäßig an einem ihrer Enden verteilten Zähnen (41a, 42a) und Aussparungen (41b, 42b) versehen sind, sowie einen Verbindungslagerschild (43) aus einem ferromagnetischen Material aufweist.

12. Maschine nach Anspruch 2, **dadurch gekennzeichnet,**
    **daß** der Rotor eine Welle (30), die von zwei Zylindern (41, 42) aus einem ferromagnetischen Material umgeben ist, welche mit gleichmäßig an einem ihrer Enden verteilten Löchern (41c, 42c) versehen sind, sowie einen Verbindungslagerschild (43) aus einem ferromagnetischen Material aufweist.

13. Maschine nach einem der Ansprüche 11 und 12, **dadurch gekennzeichnet,**
    **daß** der innere Zylinder (41) aus ferromagnetischem Material drehfest mit der Welle (30) des Rotors verbunden ist.

14. Elektrische Maschine nach Anspruch 1 vom Typ mit Linearverlagerung, **dadurch gekennzeichnet,**
    **daß** das feststehende Teil eine Schiene (50) aus einem ferromagnetischen Material mit Seitenwänden (53, 54), die mit gleichmäßig über ihre Länge verteilten Öffnungen (53b, 54b; 53c, 54c) versehen sind, aufweist,

und **daß** das bewegliche Teil einen Träger (56) aus einem nicht-magnetischen Material aufweist, der eine Ankerwicklung (58) und eine Erregerwicklung (62) trägt, welche in einem von dem gleichmäßigen Zwischenraum (60) zwischen den Seitenwänden (53, 54) gebildeten Luftspalt angeordner sind.

15. Elektrische Maschine nach Anspruch 14, **dadurch gekennzeichnet,**
    **daß** die in den Seitenwänden (53, 54) der Schiene (50) vorgesehenen Öffnungen Aussparungen (53b, 54b) sind, welche Zähne (53a, 54a) der Schiene voneinander trennen.

16. Elektrische Maschine nach Anspruch 14, **dadurch gekennzeichnet,**
    **daß** die in den Seitenwänden (53, 54) der Schiene (50) vorgesehenen Öffnungen Löcher (53c, 54c) sind, welche in regelmäßigen Abständen in den Seitenwänden vorgesehen sind.

17. Elektrische Maschine nach einem der Ansprüche 1 bis 10 und 14 bis 16, **dadurch gekennzeichnet,**
    **daß** die Ankerwicklung und die Erregerwicklung (102, 114) durch Überemanderschichten und gegenseitiges Verbinden von Scheibenspulen (104, 104b, 104c) in einem Verhältnis von mindestens einer Scheibenspule pro Phase gebildet sind, wobei die Scheibenspulen jeweils zwei Ankerwicklungsteile (70, 76) und zwei Erregerwicklungsteile (83, 84) aufweisen, die aus gedruckten Schaltungen gebildet sind, welche auf den beiden Seiten einer Platte (64) aus einem isolierenden Material ausgebildet sind.

18. Elektrische Maschine vom mehrphasigen Typ nach Anspruch 17, **dadurch gekennzeichnet,**
    **daß** jede Phase (P1, P2, P3) der Wicklung der Maschine durch Übereinanderschichten und gegenseitiges Verbinden von entsprechenden Scheibenspulen (104a, 104b, 104c) und einen Versatz gemäß der Verschiebung der übereinandergeschichteren Scheibenspulen der verschiedenen Phasen (P1, P2, P3) im Verhältnis zueinander gebildet ist.

19. Elektrische Maschine nach einem der Ansprüche 17 und 18, **dadurch gekennzeichnet,**
    **daß** die Ankerwicklungsteile (70, 76) und die Erregerwicklungsteile (83, 84) einer Scheibenspule untereinander durch Durchgangsleiter verbunden sind, die in Durchführungslöcher (82, 94) eingesetzt sind, welche in der Isolierplatte (64) vorgesehen sind.

20. Elektrische Maschine nach einem der Ansprüche 17 bis 19,
**dadurch gekennzeichnet,**
**daß** jeder Teil (70, 76) der Ankerwicklung einer jeden Scheibenspule Pole (72, 78) aufweist, die in gleichmäßigen Abständen auf der Platte (64) aus Isoliermaterial verteile sind, wobei jeder der Pole (72, 78) einer Seite in entgegengesetzter Richtung zu den beiden dazu benachbarten Polen gewickelt ist, so daß eine Wechselfolge der Magnetpole geschaffen wird.

21. Elektrische Maschine nach Anspruch 20,
**dadurch gekennzeichnet,**
**daß** die Pole (72, 78) der beiden Seiten einer Scheibenspule einander überdecken und jeweils paarweise gleichsinnig gewickelt sind.

22. Elektrische Maschine nach Anspruch 21,
**dadurch gekennzeichnet,**
**daß** die Breiten der Bereiche (95) des gedruckten Leiters in Querrichtung zur Verlagerung von der Mitte eines jeden Poles zu seinen Rändern hin abnehmen.

23. Rotierende elektrische Maschine nach einem der Ansprüche 17 bis 22,
**dadurch gekennzeichnet**
**daß** jeder Ankerwicklungspol (72, 78) einer Scheibenspule von einem gedruckten Leiter mit Flächenwicklung gebilder ist, der radiale Bereiche (95) mit einem variablen Querschnitt aufweist, die sich vom Umfang zu der Mitte der Scheibenspule hin verengen.

24. Elektrische Maschine nach Anspruch 22,
**dadurch gekennzeichnet,**
**daß** bei einer Form der Kurve der gewünschten magnetomotorischen Kraft und bei einer konstanten Dicke der Leiter (95) die Breite $\Delta\theta_{\text{piste k}}$ der Leiter durch die Gleichung $\Delta\theta_{\text{piste k}} = \Delta\theta_k - \Delta\theta_i$ gegeben ist, in der $\Delta\theta_k$ der Schnittpunkt der Kurve der gewünschten magnetomotorischen Kraft mit einem Gesamtwert der Amperewindungen ist, und $\Delta\theta_i$ der Wert des für die thermische Isolation zwischen zwei Bahnen erforderlichen Abstandes zwi schen zwei benachbarten Leitern ist.

**Claims**

1. Electric machine forming a motor or generator comprising a fixed part and a mobile part, in which one of the fixed and mobile parts (4,12,8,9; 34,36,41,42; 50,56,58; 98,99,100) is passive and comprises two parts (8,9; 41,42; 53,54; 98,99) defining a uniform spacing (12; 40; 60; 110) between them, said parts being connected to each other by a joining part (3; 43; 52; 100), and the other of said fixed and mobile parts comprises a polyphase armature coil (13; 36; 58; 102) generating a variable magnetic field as well as a centralised induction coil (14; 38; 62; 114) fed by a continuous current, said armature coils and induction coils being disposed in an air gap defined by the uniform spacing (12; 40; 60; 101), said two parts (8,9; 41,42; 53,54; 98,99) defining a uniform spacing and the joining part (3; 43; 52; 100) being made of a ferromagnetic material, all the ferromagnetic parts of the machine being situated on that of the fixed and mobile parts comprising the two parts (8,9; 41,42; 53,54; 98,99) defining said uniform spacing, and one at least of said parts of ferromagnetic material (8,9; 41,42; 53,54; 98,99) defining said uniform spacing being provided with openings (10a; 41b, 42b; 41c, 42c; 53b,54b; 53c,54c; 100a).

2. Rotating machine according to Claim 1, comprising a stator and a rotor, **characterised in that** said passive part (3,8,9; 30,41,42,43) is a passive rotor comprising two coaxial rotation parts (8,9; 41,42) made of ferromagnetic material, at least one of which is provided with openings (10a; 41b; 42b; 41c, 42c), and are connected to each other by a joining part (3; 43) coaxial to the two rotation parts likewise made of ferromagnetic material, and the other of said parts is a stator, which comprises a fixed armature coil (13;36), disposed in an air gap defined by the uniform spacing arranged between the two rotation parts, generating a rotational field, and also comprises a likewise fixed induction coil (14;38).

3. Rotating machine according to Claim 2, **characterised in that** the ferromagnetic parts (3,6,8,9; 43,42,43) are rotational.

4. Rotating machine according to Claims 2 and 3, **characterised in that** the rotor is composed of two ferromagnetic discs (8,9), at least one of which is toothed.

5. Rotating machine according to Claims 2 to 4, **characterised in** thai the rotating discs (8,9) are fixed to a shaft (3) made of ferromagnetic material.

6. Rotating machine according to Claims 2 to 5, **characterised in that** the fixed armature (13) and induction (14) coils are disposed in the space (12) between the discs (8,9).

7. Rotating machine according to one of Claims 2 to 4, **characterised in that** the armature coil (13) is a polyphase coil, the phases (P1, P2, P3) of which are disposed in the same plane or along superposed planes in the air gap (12) provided by the rotating toothed discs (8,9).

8. Rotating machine according to one of Claims 2 to 7, **characterised in that** the phases (P1, P2, P3) of the armature coil (13) are formed from coils displaced at an angle and evenly distributed around the periphery of the machine.

9. Machine according to one of Claims 2 to 8, **characterised in that** the induction coil (14) is disposed around the shaft (3) and surrounded by the armature coil (13).

10. Machine according to one of Claims 2 to 9, **characterised in that** the induction coil (14) is a full fixed coil in solenoid form.

11. Machine according to Claim 2, **characterised in that** the rotor comprises a shaft (30) surrounded by two coaxial cylinders (41, 42) made of ferromagnetic material provided with teeth (41a, 42a) and indentations (41b, 42b) evenly distributed on one of their ends and a joining flange (43) made of ferromagnetic material.

12. Machine according to Claim 2, **characterised in that** the rotor comprises a shaft (30) surrounded by two coaxial cylinders (41, 42) made of ferromagnetic material provided with holes (41c, 42c) evenly distributed on one of their ends and a joining flange (43) made of ferromagnetic material.

13. Machine according to one of Claims 11 and 12, **characterised in that** the inside cylinder (41) made of ferromagnetic material is joined with the shaft (30) of the rotor.

14. Electric machine according to Claim 1 of the linear displacement type, **characterised in that** the fixed part comprises a rail (50) made of ferromagnetic material having side walls (53, 54) provided with openings (53b,54b; 53c,54c) evenly distributed on its length, and the mobile part comprises a support (56) made of non-magnetic material, bearing an armature coil (58) and an induction coil (62) disposed in an air gap defined by the uniform spacing (60) between the side walls (53, 54).

15. Electric machine according to Claim 14, **characterised in that** the openings provided in the side walls (53, 54) of the rail (50) are indentations (53b,54b) separating the teeth (53a,54a) of said rail.

16. Electric machine according to Claim 14, **characterised in that** the openings provided in the side walls (53, 54) of the rail (50) are holes (53c, 54c) evenly spaced in said side walls.

17. Electric machine according to onc of Claims 1 to 10 and 14 to 16, **characterised in that** the armature and induction coils (102, 114) are formed by stacking and interconnecting wafers (104a, 104b, 104c) by way of at least one wafer per phase, the wafers each comprising two parts (70, 76) of the armature coil and two parts (83, 84) of the induction coil formed by printed circuits provided on the two faces of a board of insulating material (64).

18. Electric machine of the polyphase type according to Claim 17, **characterised in that** each phase (P1, P2, P3) of the coil of the machine is formed by stacking and interconnecting corresponding wafers (104a, 104b, 104c) and offsetting them in accordance with the displacement of the stacks of wafers of di fferent phases (P1, P2, P3) relative to one another.

19. Electric machine according to one of Claims 17 and 18, **characterised in that** the parts of the armature coil (70, 76) and the parts of the induction coil (83, 84) of a wafer are joined to each other by feed conductors engaged in feed holes (82, 94) arranged in the insulating board (64).

20. Electric machine according to one of Claims 17 to 19, **characterised in that** each part (70, 76) of the armature coil of each wafer comprises poles (72, 78) distributed at regular intervals over the board of insulating material (64), each of the poles (72, 78) of one face being coiled in the reverse direction of the two poles adjacent to it, thus creating an alternation of magnetic poles.

21. Electric machine according to Claim 20, **characterised in that** the poles (72, 78) of the two faces of a wafer are superposed and are coiled in pairs in the same direction.

22. Electric machine according to Claim 21, **characterised in that** the lengths of the portions of the printed connector transverse to the displacement decrease from the centre of each pole towards its edges.

23. Rotating electric machine according to one of Claims 17 to 22, **characterised in that** each pole (72, 78) of the armature coil of a wafer is formed by a flat coiled printed conductor which comprises radial portions (85) of variable cross-section narrowing from the periphery towards the centre of said wafer.

24. Electric machine according to Claim 22, **characterised in that** for a curve form for the desired magnetomotive force and for a constant thickness of the conductors (95), the length $\Delta\theta_{track\ k}$ of said conductors is given for the relation $\Delta\theta_{track\ k} = \Delta\theta_k - \Delta\theta_i$, wherein $\Delta\theta_k$ is the intersection of the curve of the desired magnetomotive force with a complete level of ampere-windings, and $\Delta\theta_i$ is the value of the distance between two adjacent conductors necessary
for thermal insulation between two tracks.

FIG.1

FIG.2

FIG.3

ddp
magnétique

FIG.4

FIG.5

FIG.6a

FIG.6b

FIG.7

FIG.10

FIG.8

FIG.9

EP 1 236 263 B1

FIG.11

FIG.12

FIG.13

FIG.14

EP 1 236 263 B1

FIG.15

EP 1 236 263 B1

FIG.16

FIG.17

FIG.18

FIG.19